# EUROPEAN PATENT SPECIFICATION

(11) **EP 1 344 302 B1**
(45) Date of publication and mention of the grant of the patent: **11.10.2006**
(21) Application number: 01271685.8
(22) Date of filing: 19.11.2001
(51) Int. Cl.: H02K 41/03

(54) **LINEAR ELECTRIC MOTOR POWERED BY THREE-PHASE ALTERNATING CURRENT**
DREIPHASEN-WECHSELSTROMGESPEISTER ELEKTRISCHER LINEARMOTOR
MOTEUR ELECTRIQUE LINEAIRE ALIMENTE EN COURANT ALTERNATIF TRIPHASE

(30) Priority: 20.12.2000 IT RE20000132
(43) Date of publication of application: 17.09.2003
(73) Proprietor: Motor Power Company S.r.l., 42024 Castelnovo Sotto (RE) (IT)
(72) Inventor: ANCESCHI, Stefano, I-42100 Reggio Emilia (IT)
(74) Representative: Gotra, Stefano
(86) International application number: PCT/IT2001/000579
(87) International publication number: WO 2002/050984

(56) References cited:
- EP-A- 0 905 869
- EP-A- 1 056 187
- US-A- 5 910 691
- US-A- 6 064 128
- PATENT ABSTRACTS OF JAPAN vol. 1996, no. 04, 30 April 1996 (1996-04-30) & JP 07 322595 A (SHICOH ENG CO LTD;OTHERS: 01), 8 December 1995 (1995-12-08)
- PATENT ABSTRACTS OF JAPAN vol. 004, no. 112 (E-021), 12 August 1980 (1980-08-12) & JP 55 068871 A (MATSUSHITA ELECTRIC IND CO LTD), 23 May 1980 (1980-05-23)
- PATENT ABSTRACTS OF JAPAN vol. 016, no. 116 (E-1181), 24 March 1992 (1992-03-24) & JP 03 285555 A (AMADA CO LTD), 16 December 1991 (1991-12-16)

## Description

### Technical Field

Linear electric motors have recently found application in the field of machine tools.

### Background Art

Linear electric motors are equipped with permanent magnets, arranged uniformly on the fixed part of the motor, and coil blocks, bearing coils mounted on various cores, which coil blocks are mobile in a parallel direction to the fixed magnets. The coil blocks are kept at a constant distance from the magnets by a mechanical arrangement based on the use of special longitudinal sliding guides.

In this category of motors, one of the main technical tasks facing designers is how to make sure that the movement of the coil block is as uniform as possible. Consideration has to be made of the fact that the motion of the coil block is greatly influenced by the high force of attraction developed between the fixed part and the mobile part of the motor, thanks to the strong magnetic field generated by the special magnets used.

There is in practice a marked tendency to "cogging", the term used to describe a snagging of the moving part at positions of maximum attraction exerted on the moving part (the coil block) by the fixed magnets. In high-precision work this is to be avoided at all costs.

Various solutions have been proposed regarding the cogging problem. Many involve a relative arrangement of the coil block and the fixed magnets in which during a run of the moving part, a significant number of cores never directly face a same number of magnets.

For example, patent publication no. WO99/41825 illustrates a solution which is substantially based on the fact that the moving part of the motor is made up of blocks of nine coils, each of which blocks is eight times the pitch of the fixed magnets and is separated from an adjacent block by a distance equal to 2/3, 1/3 or 1/2 of the magnet pitch.

With the above solution, the aim is to limit the above-described drawback by creating a design in which the distance, or pitch, between the cores of the moving part is smaller than the distance between the fixed magnets; this ratio is 8/9. Obviously newer solutions to the above problem are under development and are effective also in relation to other problems, such as constructional simplicity, low moving part inertia, advantageous costs and so on.

The main aim of the present invention is to provide a three-phase alternating-current linear electric motor, where the cogging phenomenon (lack of smoothness in advancement of the moving part), typical of this type of motor, is practically eliminated.

A further aim of the invention is to provide a three-phase alternating-current linear electric motor having characteristics which are suitable for use in machine tools and automatic machines, and in particular having low inertia in the moving part.

The above aims are all achieved with the three-phase alternating-current linear electric motor of the invention, in which a plurality of magnets are anchored to the fixed part of the motor, and are uniformly distributed at a predetermined distance one from another, and in which a plurality of coils are mounted on cores of a coil block, which block is mobile in a direction which is parallel to the fixed magnets and at a constant distance therefrom; the coils being in blocks of 6 or multiples of 6 and being uniformly distanced one from another; the length of each coil block being the overall "pitch" of the coils and in fact being equal to a length of 7 fixed magnets, or multiple of 7, this being considered the overall "pitch" of the fixed magnets. Alternatively, the fixed part can be constituted by the coil block, and the mobile part by the plurality of magnets.

The ratio between the pitch of the coils and that of the magnets, expressing this pitch in electrical degrees, can vary between 200° (coil pitch)/180° (magnet pitch) and 220° (coil pitch)/180° (magnet pitch), all considered within the scope of the present invention.

The ideal value of the above-mentioned ratio is obviously 210° (coil pitch)/180° (magnet pitch), which is equivalent to a 7/6 ratio, defined above with reference to the number of magnets and the number of coils comprised within a same length of a tract of the linear motor.

While the coil/magnet geometry is repeated in multiples of 6 or 7, following the above-mentioned ratio, the sequence of connections between the coils is repeated, preferably in multiples of 12; where, with R, S, T denoting the three supply phases, the coils are ordered thus, for example: R,-R, -T, T, S, -S, -R, R, T, -T, -S, S .

According to the above-mentioned constructional characteristics, a linear motor is obtained in which the single pitch between the single cores of the moving coil block is greater than the single pitch between the single fixed magnets, and the ratio is comprised between a specific interval, with the result that there is a considerable reduction in the cogging phenomenon and the motor is therefore particularly suitable for precision work, thanks to the simplicity and low inertia values of the moving group with respect to the solutions where the number of coils is greater than the number of magnets.

A precise definition of the invention is given in claims 1 and 7.

### Disclosure of Invention

Further characteristics and advantages of the present invention will better emerge from the detailed description that follows of a preferred but non-exclusive embodiment of the invention, illustrated purely by way of non-limiting example in the accompanying figures of the drawings, in which:
figure 1 is a frontal view, in section, of a tract of a linear electric motor according to the invention;
figure 2 is a front view of a component of the motor of figure 1;
figure 3 is a perspective view, partially sectioned, of the structural part of the linear motor of figure 1;
figure 4 is a front view, in section, of a further embodiment of the linear motor of the invention.

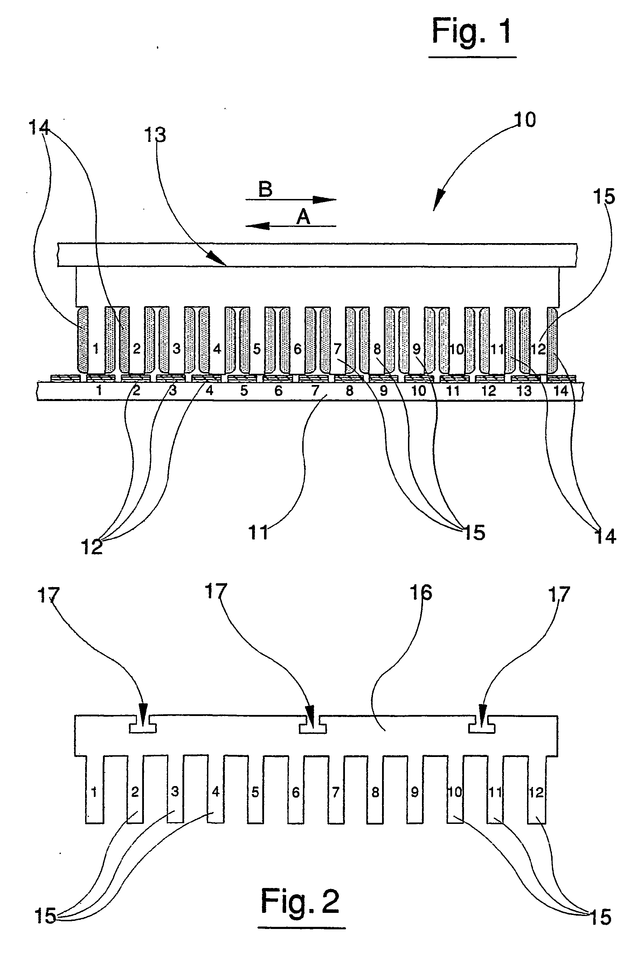

With reference to figure 1 of the drawings, a tract of linear motor is denoted by 10. The fixed part 11 exhibits a series of permanent magnets 12, arranged at a uniform distance one from another. The magnets are numbered in the figure illustrating this embodiment, from 1 to 14, and the pitch is denoted by Tm.

13 denotes the coil block, which is the moving part of the motor, located opposite the fixed part 11. This coil block 13 can move in two directions A and B according to the three-phase sequence in the coils 14 mounted on the cores 15 of the moving structure.

The cores 5 of the coil block 13 are numbered in the figure illustrating this embodiment from 1 to 12, and the pitch is denoted by Td. The pitch is calculated from the sum of the distance, Tx, between the sides of the median spire of a generic coil 14, plus the distance Ty between the sides of the median spires of two adjacent coils.

From the above it can be observed that if the fixed part 11 and the coil block 13 are of equal length, the number of magnets will be 14 and the number of coils will be 12. Thus, considering that the distance, or pitch Td, between the coils is 1/12 of the length, and that the distance, or pitch Tm, is 1/14 of the same length, then the ratio between pitches Td and Tm will be 14/12, i.e. 7/6.

This ratio can also be expressed considering the electrical phase displacement between two coils 14 and two magnets 12.

While the phase displacement between two adjacent magnets 12 of opposite polarity is obviously 180°, the displacement between two adjacent coils 14, considering the length of the polar sector between two consecutive axes of the coils 14 is (180*7/6)=210; thus, the ratio between the displacement between two adjacent coils and the displacement between two adjacent magnets is 210°/180°, and this ratio is obviously 7/6, as previously stated.

It is worthwhile noting here that independently of the embodiment herein considered, the validity of the solution remains intact as long as the distance, expressed in degrees of electric displacement, between two contiguous coils in a linear motor according to the present invention, is between 200° and 220°. From experimental evidence it emerges that in linear electric motors in which the coils have been distanced at an electrical angle falling within the above range, any lack of uniformity in motion is of an irrelevant entity.

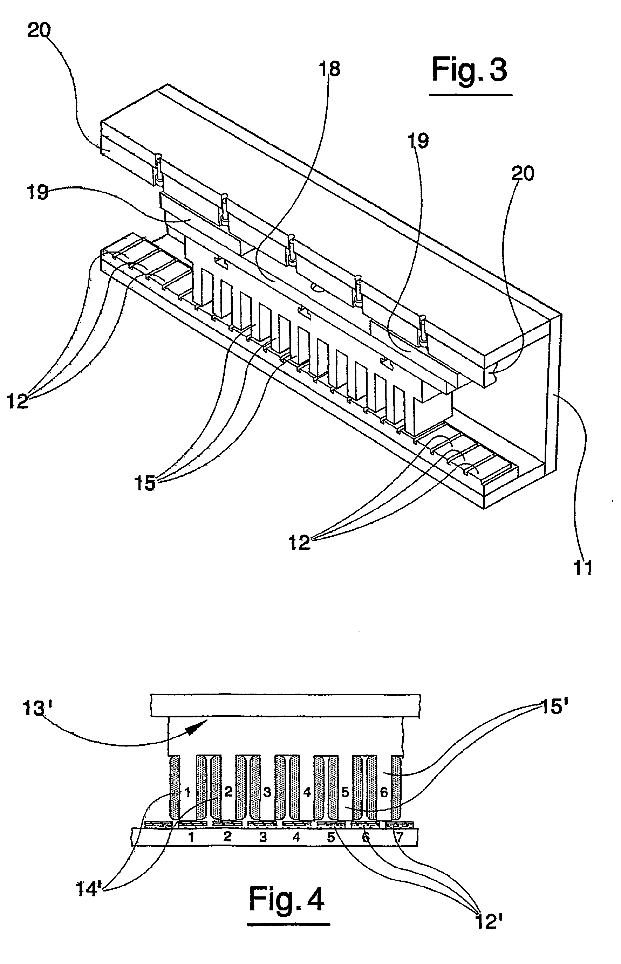

In figure 2 a component of the coil block 13 is illustrated. A ferrous-magnetic strip 16, is part of the nucleus of the coil block. Obviously it is coupled with similarly-made strips and is anchored by screws or similar in the recesses 17 to an upper plate 18 which, as can be seen in figure 3, is fixed to slides 19 which slide along longitudinal guides 20 solidly constrained to the fixed structure 11 of the motor.

The cores of the coil block 13, in the present embodiment, which are in effect 12 teeth around which the coils 14 are wound, are supplied with three-phase alternating current, with an order (denoting the phases by R, S and T) which can be as follows:
R,-R, -T, T, S, -S, -R, R, T, -T, -S, S
or
-R, R, T,-T, -S, S, R,-R, -T, T, S;-S
or
-T, T, S, -S, -R, R, T, -T,-S, S, R, -R
or
T,-T, -S, S, R,-R, -T, T, S -S, -R, R
or
S, -S,-R, R, T, -T,-S, S, R, -R, -T, T
or
-S, S, R,-R, -T, T, S -S, -R, R, T,-T.

There are further possible solutions, with cores composed of 6 coils or multiples thereof.

One of these examples is illustrated in figure 4; it is made up of 6 coils 14', mounted on 6 cores 15', of a moving coil block 13'. The opposite magnet block, equal in length to the coil block 13', comprises 7 uniformly-distanced magnets 12'.

In this embodiment the pitches between the cores of the coil block Td and the magnets of the fixed block Tm are the same as those of the embodiment of figure 1; but these distances could be different without invalidating the solution proposed by the present invention, as long as the ratio was maintained unaltered. In particular, the ideal value of this ratio, as we have seen, is 7/6 or, expressed in electric phase displacement terms, 210°/180°; it could also be between 200°/180° and 220°/180°.

The structure of the motor of the invention can differ from the one illustrated by way of example in figure 3; for example, the coil block 13 could be anchored differently to the fixed part 11, with perhaps a greater number of parallel guides used.

Other solutions could be applied to the mechanical connections among the various structural organs of the motor, while still conserving the relative geometry between coils and magnets.

The moving part could also be made from more than one block made up of 6 coils or multiples thereof, arranged consecutively along the direction of motion. The distance between the blocks could be optimised according to various parameters, depending on the specific field of application of the invention.

In any case, the invention offers a considerable reduction in the occurrence of cogging in comparison to other known solutions, as well as giving a more immediate response to electrical commands.

Thanks to the special structural configuration, the motor is extremely simple, the moving part being much lighter than in other known motors; production is also more economical.

## Claims

1. A linear electric motor (10) powered by three-phase alternating current, comprising a plurality of magnets (12) anchored at a uniform and predetermined pitch to a fixed part (11) of the motor (10), a plurality of coils (14) mounted on cores (15) of a coil block (13), which coil block (13) is mobile in a parallel direction to the magnets (12) and at a constant distance therefrom; wherein the plurality of coils (14) composes blocks of coils formed by six individual coils or multiples of 6, the coils being uniformly distanced one from another, and wherein a ratio between a distance between axes of two adjacent coils of a single block of the plurality of coils (14) and a pitch of two magnets anchored to the fixed part of the motor can be expressed in electrical degrees in a range going from a coil pitch of 200°/a magnet pitch of 180° and a coil pitch of 220°/ a magnet pitch of 180°.

2. The linear electric motor (10) of claim 1, wherein a length of each block of coils is equal to 7, or a multiple of 7, times a pitch of the magnets (12).

3. The linear electric motor (10) of claim 2, wherein the coil block (13) comprises at least a block composed of 12 coils, a length of which is 14 times an individual pitch of the magnets (12).

4. The linear electric motor of claim 3, wherein the coils are supplied with three-phase alternating current in an order as follows:
R,-R, -T, T, S, -S, -R, R, T, -T, -S, S
or in a completely opposite order for each coil.

5. The linear electric motor (10) of claim 3, wherein the coils are supplied with three-phase alternating current in an order as follows:
-T, T, S, -S, -R, R, T, -T,-S, S, R, -R
or in a completely opposite order for each coil.

6. The linear electric motor (10) of claim 3, wherein the coils are supplied with three-phase alternating current in an order as follows:
S, -S,-R, R, T, -T,-S, S, R, -R, -T, T
or in a completely opposite order for each coil.

7. A linear electric motor (10) powered by three-phase alternating current, comprising a plurality of coils (14) mounted on cores (15) of a coil block (13) which coil block (13) is fixed; a plurality of magnets (12) uniformly distanced according to a determined pitch, the plurality of magnets (12) being mobile in a parallel direction to the plurality of coils (14) and being maintained at a constant distance therefrom; wherein coils of the plurality of coils (14) are gathered in blocks each comprising 6 coils, or multiples of 6, uniformly distanced one from another, and wherein a ratio between a distance between axes of two adjacent coils of a single block of the plurality of coils (14) and a pitch of two magnets can be expressed in electrical degrees in a range going from a coil pitch of 200°/ a magnet pitch of 180° and a coil pitch of 220° / a magnet pitch of 180°.

8. A linear electric motor (10) of claim 7, wherein a length of each block of coils (14) is equal to 7, or a multiple of 7, times a pitch of the magnets (12).

## Patentansprüche

1. Dreiphasenwechselstromgespeister linearer Elektromotor (10), enthaltend eine Anzahl von Magneten (12), die mit einem gleichmässigen und vorgegebenen Abstand an einem feststehenden Teil (11) des Motors (10) verankert sind, eine Anzahl von Spulen (14), montiert auf Kernen (15) eines Spulenblocks (13), welcher Spulenblock (13) beweglich ist in einer Richtung parallel zu den Magneten (12) und mit einem gleichbleibenden Abstand von diesen; bei welchem die Anzahl von Spulen (14) Blöcke von Spulen bilden, geformt aus sechs einzelnen Spulen oder aus einem Mehrfachen von 6, wobei die Spulen gleichmässig voneinander abstehend sind, und bei welchem das Verhältnis zwischen einem Abstand zwischen den Achsen von zwei aneinander grenzenden Spulen eines einzelnen Blockes der Anzahl von Spulen (14) und einem Abstand von zwei an dem feststehenden Teil des Motors verankerten Magneten in elektrischen Graden innerhalb eines Bereiches ausgedrückt werden kann, der von einem Spulenabstand von 200° / einem Magnetabstand von 180° und einem Spulenabstand von 220° / einem Magnetabstand von 180° geht.

2. Linearer Elektromotor (10) nach Patentanspruch 1, bei welchem die Länge eines jeden Spulenblocks (13) 7 Malen oder einem Mehrfachen von 7 Malen eines Abstandes der Magneten (12) entspricht.

3. Linearer Elektromotor (10) nach Patentanspruch 2, bei welchem der Spulenblock (13) wenigstens einen Block bestehend aus 12 Spulen enthält, dessen Länge 14 Male einem einzelnen Abstand der Magneten (12) entspricht.

4. Linearer Elektromotor nach Patentanspruch 3, bei welchem die Spulen mit Dreiphasenwechselstrom in folgender Ordnung gespeist sind:
R, -R, -T, T, S, -S, -R, R, T, -T, -S, S
oder in einer vollkommen umgekehrten Ordnung für alle Spulen.

5. Linearer Elektromotor (10) nach Patentanspruch 3, bei welchem die Spulen mit Dreiphasenwechselstrom in folgender Ordnung gespeist sind.
-T, T, S, -S, -R, R, T, -T, -S, S, R, -R
oder in einer vollkommen umgekehrten Ordnung für alle Spulen.

6. Linearer Elektromotor (10) nach Patentanspruch 3, bei welchem die Spulen mit Dreiphasenwechselstrom in folgender Ordnung gespeist sind.
S, -S, -R, R, T, -T, -S, S, R, -R, -T, T
oder in einer vollkommen umgekehrten Ordnung für alle Spulen.

7. Dreiphasenwechselstromgespeister linearer Elektromotor (10), enthaltend eine Anzahl von Spulen (14), montiert auf Kernen (15) eines Spulenblocks (13), welcher Spulenblock (13) feststehend ist; eine Anzahl von Magneten (12), gleichmässig voneinander abstehend nach einem vorgegebenen Abstand, wobei die Anzahl von Magneten (12) beweglich ist in einer Richtung parallel zu der Anzahl von Spulen (14) und mit einem gleichbleibenden Ab- .. stand von diesen; bei welchem die Spulen der Anzahl von Spulen (14) zu Blöcken zusammengefasst sind, jeder enthaltend 6 Spulen oder ein Mehrfaches von 6, voneinander abstehend, und bei welchem das Verhältnis zwischen einem Abstand zwischen den Achsen von zwei aneinander grenzenden Spulen eines einzelnen Blockes der Anzahl von Spulen (14) und einem Abstand von zwei Magneten in elektrischen Graden innerhalb eines Bereiches ausgedrückt werden kann, der von einem Spulenabstand von 200° / einem Magnetabstand von 180° und einem Spulenabstand von 220° / einem Magnetabstand von 180° geht.

8. Linearer Elektromotor (10) nach Patentanspruch 7, bei welchem die Länge eines jeden Spulenblocks (14) 7 Malen oder einem Mehrfachen von 7 Malen eines Abstandes der Magneten (12) entspricht.

## Revendications

1. Moteur électrique linéaire (10) alimenté en courant alternatif triphasé, comprenant une pluralité d'aimants (12) ancrés selon un pas uniforme prédéterminé à une partie fixe (11) du moteur (10), une pluralité de bobines (14) montées sur des noyaux (15) d'un bloc inducteur (13), lequel bloc inducteur (13) est mobile dans une direction parallèle aux aimants (12) et à une distance constante de ces derniers; dans lequel la pluralité de bobines (14) compose les blocs inducteurs formés de six ou multiples de six bobines individuelles, les bobines étant uniformément séparées l'une de l'autre, et dans lequel un ratio entre une distance entre des axes de deux bobines adjacentes d'un seul bloc de la pluralité de bobines (14) et un pas de deux aimants ancrés sur la partie fixe du moteur peut être exprimé en degrés électriques dans un intervalle compris entre un pas de bobine de 200°/un pas d'aimant de 180° et un pas de bobine de 220°/un pas d'aimant de 180°.

2. Moteur électrique linéaire (10) selon la revendication 1, dans lequel une longueur de chaque bloc de bobines est égale à sept, ou un multiple de sept, fois un pas des aimants (12).

3. Moteur électrique linéaire (10) selon la revendication 2, dans lequel le bloc inducteur (13) comprend au moins un bloc composé de 12 bobines, une longueur duquel est quatorze fois supérieure à un unique pas des aimants (12).

4. Moteur électrique linéaire (10) selon la revendication 3, dans lequel les bobines sont alimentées en courant alternatif triphasé selon la succession suivante:
R, -R, -T, T, S, -S, -R, R, T, -T, -S, S
ou dans une succession complètement opposée pour chaque bobine.

5. Moteur électrique linéaire (10) selon la revendication 3, dans lequel les bobines sont alimentées en courant alternatif triphasé selon la succession suivante:
-T, T, S, -S, -R, R, T, -T, -S, S, R, -R
ou dans une succession complètement opposée pour chaque bobine.

6. Moteur électrique linéaire (10) selon la revendication 3, dans lequel les bobines sont alimentées en courant alternatif triphasé selon la succession suivante:
S, -S, -R, R, T, -T, -S, S, R, -R, -T, T
ou dans une succession complètement opposée pour chaque bobine.

7. Moteur électrique linéaire (10) alimenté en courant alternatif triphasé, comprenant une pluralité de bobines (14) montées sur des noyaux (15) d'un bloc inducteur (13) lequel est fixé; une pluralité d'aimants (12) uniformément séparés selon un pas déterminé, la pluralité d'aimants (12) étant mobile dans une direction parallèle à la pluralité de bobines (14) et étant maintenue à une distance constante de ces dernières; dans lequel des bobines de la pluralité de bobines (14) sont réunies en blocs comprenant chacun six ou multiples de six bobines, uniformément séparées entre elles, et dans lequel un ratio entre une distance entre des axes de deux bobines adjacentes d'un unique bloc de la pluralité de bobines (14) et un pas de deux aimants peut être exprimé en degrés électriques dans un intervalle variant d'un pas de bobine de 200°/un pas d'aimant de 180° et un pas de bobine de 220°/un pas d'aimant de 180°.

8. Moteur électrique linéaire (10) selon la revendication 7, dans lequel une longueur de chaque bloc de bobines (14) est égale à sept ou un multiple de sept fois un pas des aimants (12).
